# EUROPEAN PATENT APPLICATION

(11) **EP 1 926 275 A1**
(43) Date of publication of application: **28.05.2008**
(21) Application number: 06024189.0
(22) Date of filing: 22.11.2006
(51) Int. Cl.: H04L 29/06, H04L 12/56

(54) **Method for data communication between user end devices**

(71) Applicant: Rohill Technologies B.V, 7903 AN Hoogeveen (NL)
(72) Inventor: van der Boom, Rolando Enrique, 7901 JZ Hoogeveen (NL)
(74) Representative: Gerstein, Hans Joachim

(57) **Abstract**

A method for data communication between user end devices (1, 9) provided for communication in mobile communication networks (4, 6) based on different communication standards for the sender user end device (1) to at least one receiver user end device (9), is disclosed. Said different mobile communication networks (4, 6) being interconnectable to each other for establishing a communication link between the user end devices (1, 9). The method comprises the steps of:
a) coding of at least one data message to be transferred from a sender user end device (1) to at least one receiver user end device (9) according to the communication standard of the at least one receiver user end device (9); so that the coded data message is compatible with the lowest data transmission rate in the data transmission channel between the sender user end device (1) and the at least on receiver user end device (9); and
b) transmitting said coded data message to the at least one addressed receiver user end device (9), wherein the coding of the data message remains unchanged over the entire transmission from the sender user end device (1) to the receiver user end device (9).

## Description

The invention relates to a method for data communication between user end devices provided for communication in mobile communication networks based on different communication standards for the sender user end device and the at least one receiver user end device, said different mobile communication networks being interconnectable to each other for establishing a communication link between the user end devices.

Mobile communication by use of cell-phones, radio data transmission cards and so on is well established in the art. The technique of mobile communication networks are defined in technical standards, for example GSM (Global System for Mobile Communications), UMTS (Universal Mobile Telecommunication Systems), IS 95 and so on. Further, narrowband standards like TETRA (Terrestrial Trunked Radio), TERTRAPOL, APCO-25 etc. are provided especially for secure data communication, including group calling.

Mobile communication networks of different communication standards can be linked together by use of telecommunication nodes and additional data transmission channels. The connection of mobile communication networks of different mobile communication standards may be provided by use of one of more wired or wireless communication networks according to a third communication standard, e.g. ISDN (Integrated Services Digital Network or an IP (Internet Protocol) network.

The way of packaging of data messages differs from communication standard to communication standard as the available data rate for data transmission differs from communication standard to communication standard. Therefore, each standard provides its own coding scheme in order to obtain data messages with a bit rate that can be transferred in a data stream according to the respective standard.

Hereinafter, data messages should be understood as any data communicated between user and devices, especially voice messages, text messages, picture messages and combination thereof.

The object of the present invention is to provide a method, which allows secure data transmission from a sender user end device and a corresponding home mobile communication network of a home communication standard and at least one receiver user end device provided for communication in a second mobile communication network of a second communication standard, which differs from the first home communication standard.

The object is achieved by the method according to claim 1. Preferred embodiments are disclosed in the depending claims.

A further object of the present invention is to provide user end devices for secure data transmission to at least one receiver user end device, wherein the sender user end device and the at least one receiver user end device are provided for communication in mobile communication networks according to different mobile communication standards.

The object is achieved by the user end device according to claim 9.

According to the present invention, the data messages to be transferred to the at least one receiver end device are coded and if required encrypted by the sender user end device compatible with the narrowband standard of the at least one receiver user end device. The so encoded data messages are transmitted from the sender user end device via the home mobile communication network to the mobile communication network of the at least one receiver user end device, wherein coding remains unchanged over the entire transmission from sender user end device to the at least one receiver user end device. The vocoder chosen for the data messages, e. g. speech data, and subsequently being encrypted is chosen to be compatible with the communications network having the lower transmission speeds, rather than just choosing an extra vocoder, meeting the compression and quality requirements, to implement in both network terminals. Thus only the terminals of one network require specific adaption to this method.

In the receiver end device, the further steps of
- receiving the encoded data message by the at least one addressed receiver user end device, and
- decoding of the data message, and
- further processing of the decoded data message by the least one addressed receiver user end device
are performed. Optimally the step of decoding includes decryption of encrypted data message. Then, only the sender user end device and the at least one receiver user end device requires knowledge of the necessary encryption keys, so that the data messages can be transferred securely through any data channel (S) provided between the sender user end device and the at least one receiver user end device.

Data messages may be digital speech data, packet data, short data messages, circuit mode data and so on.

In a preferred embodiment, the sender user end device comprises the second processor for implementing an additional vocoder, error protection algorithms and encryption functions compatible with the second mobile communication standards of the at least one receiver user end device.

For unsecured data communication, the sender user end device is provided to use a second processor and a second vocoder for coding the data message according to the home mobile communication network standard.

In a preferred embodiment, the availability and validity of encryption keys is checked prior to establishment of a data communication call. Then, the call set-up time can be significantly reduced compared to authentication and transfer of encryption keys after establishing the call.

Further, it is preferred to generate a set of descriptors for a coded data message allowing use of different encryption keys or encryption methods for a plurality of receiver user end devices or groups of receiver user end devices. The ability to use a multiplicity of secret keys as defined e. g. in the TETRA-standard, to associate a different encryption with different users, different user groups and with different encryption functions such as Over The Air Re-keying (OTAR) has also advantages. OTAR does have advantages in that new keys can be secretly distributed remotely and that a set of the formerly mentioned keys are used to perform this as described e. g. in the TETRA Specification.

It is further preferred to add error protection information to the coded data message.

In a preferred embodiment, the sender user end device is provided for reading control data for the additional steps of coding, error protection and/or encryption out of a memory card of the sender user end device. Then, the sender user end device, e. g. a cell-phone, is also capable of making completely normal and standard, within the definition of its own cellular standard, telephone calls without encryption. The additional vocoder, error protection and encryption functions are provided on a secondary processor with secure features, e.g. secure tamper-proof flash memory for storage of encryption keys, which might for example be implemented in a second SIM-card.

The invention is described in the following by way of examples by use of the enclosed drawings, in which:
- Figure 1:: is a flow diagram of the message according to the present invention;
- Figure 2:: is a block diagram of a data communication system comprising a sender user end device and a plurality of receiver user end devices and two different mobile communication networks;

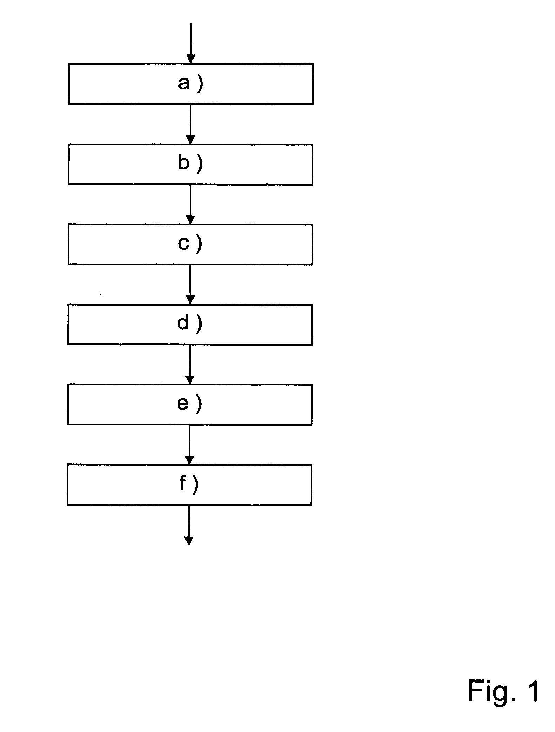

Figure 1 shows a flow diagram of the method according to the present invention.

For transmitting one or more data messages between a sender user end device and at least one receiver user end device, the sender user end device performs the steps of:
a) coding of the at least one data message to be transferred from the sender user end device to at least one receiver user end device according to the communication standard of the at least one receiver user end device so, that the coded data message is compatible with the lowest data transmission rate in the data transmission channel between the sender user end device and the at least one user receiver end device; and
b) transmitting said coded data message to the at least one addressed receiver user end device, wherein the coding remains unchanged over the entire transmission from the sender user end device to the receiver user end device.

The at least one addressed receiver user end device performs the further steps of:
d) receiving the coded data message by the at least one addressed receiver user end device; and
e) decoded said data message; and
f) further processing of the decoded data message by the at least one receiver user end device.

Preferably, a cell-phone with dual vocoder capability is used as sender user end device, wherein the first vocoder of the cell-phone complies with the standards of the home network (i.e. GSM, UMTS, IS 95 etc.) and the second vocoder complies with the narrowband standards of a second mobile network (i.e. TETRA, TERTAPOL, APCO-25 etc.). The second vocoder in the cell-phone is chosen to be compatible with the lowest rate communication system (i.e. TETRA, TETRAPOL, APCO-25 etc.) rather than just choosing any vocoder that will achieve the compression and quality requirements for communication as single system.

The sender user end device (cell-phone) is also capable of making completely normal standard telephone calls without encryption within the definition of the cellular standard of its own home network. The additional vocoder, error protection and encryption functions can be provided on a secondary processor with secure features (i.e. secure-temper-proof flash memories for storages of encryption keys). This might for example be implemented on second SIM-card.

For processing of a speech data messages, the following actions are performed for speech coding, said action being separated from call set-up and authentication procedures.

Speech coding comprising the following steps:
I) Voice signal is digitised (typical band width on 3.4 kHz sample at 8 kHz with 8 Bits to give 64kBit/second as data);
II) Digitised voice is then compressed with a voice coder (vocoder). In TETRA the bit rate is then 4.567 kBit/s, while in full rate GSM, the bit rate would be 13.8 kBit/s, already exceeding the capacity of the TETRA air-interface channel;
III) Forward error correction is now selectively added to the data to make it possible to detect and correct errors at the far end of the link. In TETRA this increases the data rate to 7.2 kBit/s.
IV) In case that encryption is required, it is added now. One of several secret algorithms can be used for this. Encryption may be provided for the air interface and/or the end to end communication. Usually, it is not the algorithm that need to be kept secret, but one of the critical input variables, known as keys. Thus, through a simple key (variable) change a potentially compromised encryption can be made secure again. These keys have to be kept secret. Secure and tamper proof memory is often employed for storing the keys;
V) The data is inserted into the framing structure of the bearer network and transmitted. If synchronisation control data is required for example by an end-end encryption process, then due to the error tolerance of the speech channel a small amount of data can be thrown away (stolen) to make room for the control data. TETRA has built in mechanisms to allow the detection of "stealing".
VI) At the receiving end the data is decrypted if needed;
VII) The output of any decryption is then fed into the error detection/correction algorithm. The scrambling effect of the encryption will probably amplify any otherwise small transmission errors so as to corrupt entire sub-blocks of data at a time;
VIII) The forward error-correction is robust and the decoded output is then passed to the vocoder for decoding. In TETRA and other similar systems when a speech sub-frame is irrecoverably corrupted, the previous speech frame is re-played, thus hiding the error.
IX) The resulting data can now be further audio processed if required and then sent to a digital to analogue converter and audio amplifier circuits.

The data messages communicated between the sender user end device and the receiver user end device may be digital speech data, packet data, short data messages, circuit mode data etc..

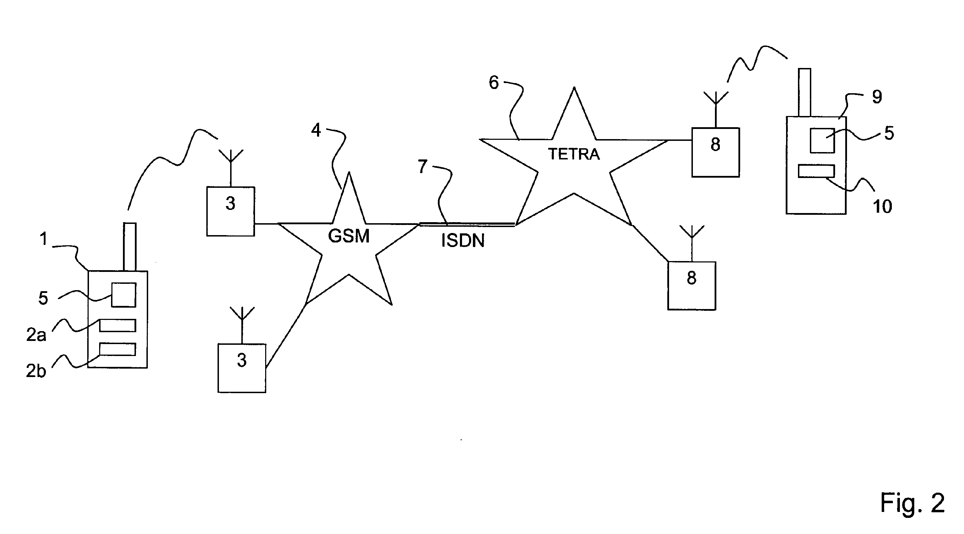

Figure 2 shows a block diagram of a communication system provided for data communication between user end devices which are provided for communication in mobile communication networks based on different communication standards for the sender user end device and the at least one receiver user end device.

For example, the sender user end device 1 comprises the first processor 2a with the first vocoder for communicating in the home mobile communication network, which complies to a first communication standard e.g. GSM-standard. Radio communication of the sender user end device 1 and a base station 3 of the home mobile communication network 4 is achieved by an integrated high frequency radio interface 5 (i. e. a radio transceiver air-interface) of the sender user end device 1. The home mobile communication network 4 of the sender user end device 1 is interconnected to a second mobile communication network 6, which complies to a different communication standard e.g. TETRA, for example via a wired telecommunication network 7, which complies to a third communication standard, e.g. ISDN or IP. Alternatively, a direct or wireless connection between the home mobile communication network 4 and the second mobile communication network 6 may be provided.

The second mobile communication network 6 comprises also at least one base station 8 having a high frequency radio interface for radio communication with the at least one receiver user end device 9. The receiver user end device 9 is provided for communicating with the second mobile communication network 6 according to the second communication standard, e.g. TETRA, and therefore uses a processing vocoder, which is arranged for data communication according to the second mobile communication standard. The second communication standard supports secure encrypted data communication between user end devices in the case that the interconnected user end devices are communicating on the basis of the same communication standard.

The sender user end device according to the present invention allows encrypted end-to-end communication between user end devices also in the case that the sender user end device and receiver user end device are communicating in different home mobile communication networks 4, 6 according to different communication standards (e.g. GSM und TETRA). Thus, a communication between the primary cellular system and a secondary (secure) cellular system, e.g. TETRA, APCO-25 or TETRAPOL etc., is established. It can be assumed that the primary cellular system has wider area covered (indeed international) and is operated by unknown or uncontrolled third parties. It is therefore insecure and untrusted.

The use of a single encryption method from one into the other, i.e. from the sender user end device to the at least receiver user end device, implies that the data subjected to the encryption, for example speech, is not changed until the point of delivery. Normally, this is a problem as also major radio and non-radio communication systems use incompatible speech vocoder data formatting and/or data rates.

The secondary cellular system, e. g. TETRA, uses a speech encoder with a bit rate of 4,567 bits/second. This is the data that is encrypted for an end-to-end encryption services. Thereafter the data is encoded to 7,200 bits/second with a forward error protection scheme. Also these two actions could be performed in the opposite sequence provided both ends of the link behalf in an equivalent manner. The data then passes through the TETRA mobile communication network 6 (only changes been to correct data errors), through a fixed wire or wireless link 7 to the primary mobile communication network 4. Once in the cellular system, e.g. in the GSM mobile communication network 4, the channel type used can be a low-rate data channel e.g. 9.6 kbit/second. The difference between the 7.2 kbit and 9.6 kbit data link capacity is used to provide data framing for transport to an external modem e.g. ISDN-modem, into the same mobile communication network 4. Any spare capacity can be used for additional error correction and error checking or be packed with synchronization information.

Through mapping of addresses GSM-ID to TETRA-subscriber ID to TETRA group ID (and so on), the implementation of group calling and individual calling to/from the cellular hand set, i.e. the user end device 1, 9, can be implemented.

The choice of encryption algorithms is in this case of lesser importance as any suitable scheme could be used, for example including but not limited to Advanced Encryption Standard (AES), triple Data Encryption Standard (DES), International Data Encryption Algorithm (IDEA).

The method of authentication (if used) is also not critical, however as in the TETRA systems a pre-selection of encryption keys prior to establishment of a call can advantageously reduce the call set-up time for example from ~ 10 seconds to ~0.300 seconds. The ability to use multiple keys as in TETRA, to associate a different encryption with different users, different user groups and with different encryption functions, such as over the air re-keying (OTAR) is also advantages.

Key distribution methods may be manual or automated using methods including over the air re- keying (OTAR), e.g. using TETRA SDS or cellular SMS-service (short message service) or via key fill-gun. However in a practical implementation consistent and preferably compatible methods should be used throughout to facilitate security and management.

The end-to-end communication encryption results in that both mobile communication networks 4, 6 are encrypted with the same encryption over the air-interfaces. Thus, there is no need for a secure gateway. Additionally the air-interfaces in the GSM and TETRA mobile communication networks 4, 6 can be protected with air-interface encryption in order to hide identities and control signalling.

It should be noted that figure 2 shows only one illustrative case and that other terminals can also be involved in a call (in either or both networks). The call can be originated in either network. The terminals in either network are capable of non-encrypted calls. The terminals in the cellular (higher band width) cellular network also retain the standard vocoder (s) for making standard calls. Further, it should be noted that the functions described herein are separated and additional to any authentication and network access control functions performed in conjunction with e. g. the network SIM card of GSM.

## Claims

1. Method for data communication between user end devices (1, 9) provided for communication in mobile communication networks (4, 6, 7) based on different communication standards for the sender user end device (1) and at least one receiver user end device (9), said different mobile communication networks (4, 6, 7) being interconnectable to each other for establishing a communication link between the user end devices (1, 9), **characterized by** the steps of:
a) coding of at least one data message to be transferred from a sender user end device (1) to at least one receiver user end device (9) according to the communication standard of the at least one receiver user end device (9) so, that the coded data message is compatible with the lowest data transmission rate in the data transmission channel between the sender user end device (1) and the at least on receiver user end device (9); and
b) transmitting said coded data message to the at least one addressed receiver user end device (9), wherein the coding of the data message remains unchanged over the entire transmission from the sender user end device (1) to the receiver user end device (9).

2. Method according to claim 1, **characterized by** the further steps of:
d) receiving the coded data message by the at least one addressed receiver user end device (9); and
e) decoding said data message; and
f) further processing of the decoded data message by the at least one receiver user end device (9).

3. Method according to claim 1 or 2, **characterized in, that** the step of coding of the data message for transmitting to at least one receiver user end device (9) is performed in a second processor (2b) of the sender user end device (1), and that data communication in the mobile communication network (4) of the sender user end device (1) is otherwise performed by a coding data message by use of a first processor (2a).

4. Method according to one of the preceding claims, **characterized by** encrypting said coded data message according to the communication standard of the at least one receiver user end device (9).

5. Method according to claim 4, **characterized by** checking the availability and validity of encryption keys prior to establishment of a data communication call.

6. Method according to one of the preceding claims, **characterized by** generating a set of descriptors for a coded data message allowing use of different encryption keys or encryption algorithms for a plurality of addressed receiver user end devices (9) or groups of addressed receiver user end devices (9).

7. Method according to one of the preceding claims, **characterized by** adding error protection information to the coded data message.

8. Method according to one of the preceding claims, **characterized by** reading control data for the additional steps of coding, error protection and encryption out of a memory card of the sender user end device (1).

9. Method according to one of the preceding claims, **characterized in that** the mobile communication standard of the home network of the sender user end device (1) is a system such as, but not restricted to the Global System for Mobile Communications (GSM), Universal Mobile Telecommunication System (UMTS), or IS 95 standard and that the additional vocoder for the steps of coding and encrypting complies with a narrowband standards such as, but not restricted to, Terrestrial Trunked Radio (TETRA), TETRAPOL, or Association of Public Safety Communications Officials-International Inc. Project 25 (APCO-25).

10. User end device (1) for data communication with at least one receiver user end device (9), said user end device (1) comprising:
- a first vocoder for coding of data messages according to the communication standard of a home mobile communication network (4) and establishing a data communication via said home mobile communication network (4),
- a second vocoder for coding of data messages according to a second communication standard having a lower data transmission rate than the first home communication standard,
- a radio interface (5) for radio transmission of coded data messages;
**characterized in that** the user end device (1) is provided for coding and encrypting a data message provided for at least one receiver user end device (9) in the second communication standard by use of the second vocoder and radio transmitting the encrypted data message by use of the radio interface (5).
